(19) Europäisches Patentamt
European Patent Office
Office européen des brevets

(11) **EP 0 820 137 A2**

(12) **EUROPÄISCHE PATENTANMELDUNG**

(43) Veröffentlichungstag:
21.01.1998 Patentblatt 1998/04

(51) Int. Cl.⁶: **H02J 3/24**

(21) Anmeldenummer: 97112043.1

(22) Anmeldetag: 15.07.1997

(84) Benannte Vertragsstaaten:
AT BE CH DE DK ES FI FR GB GR IE IT LI LU MC NL PT SE

(30) Priorität: 15.07.1996 DE 19628422

(71) Anmelder:
Fachhochschule Konstanz
78462 Konstanz (DE)

(72) Erfinder:
Bystron, Klaus, Prof. Dr.-Ing.
88682 Salem-Beuren (DE)

(74) Vertreter:
Hiebsch, Gerhard F., Dipl.-Ing. et al
Hiebsch Peege Behrmann,
Patentanwälte,
Heinrich-Weber-Platz 1
78224 Singen (DE)

(54) **Vorrichtung und Verfahren zur Blindstrom-Kompensation**

(57) Die Erfindung betrifft eine Vorrichtung zum Ausgleichen von Blind- und/oder Oberschwingungskomponenten eines von oder zu einer elektrischen Anlage (10) fließenden Netzstroms durch Einprägen eines entsprechend negierten Stroms mittels einer Stromquelle, wobei die Vorrichtung einen kapazitiven Speicher (16) und einen mit dem kapazitiven Speicher (16) zusammenwirkenden Stromrichter (18) aufweist, wobei die Stromquelle eine erste Einrichtung zum Erfassen des auszugleichenden Netzstroms (W1), eine zweite Einrichtung (22,24,26) zum Erzeugen eines Stromsollwerts zur Aufrechterhaltung einer konstanten Spannung am kapazitiven Speicher (16) und eine mit der ersten und der zweiten Einrichtung verbundene Vergleichseinrichtung (V1) zum Erzeugen eines um einen Wirkanteil bereinigten, resultierenden Sollwerts für das Einprägen des negierten Stroms als Reaktion auf die durch die erste und die zweite Einrichtung erfaßten Signale aufweist.

Fig.1

EP 0 820 137 A2

## Beschreibung

Die vorliegende Erfindung betrifft eine Vorrichtung zum Kompensieren von Blind- und/oder Oberschwingungskomponenten eines von oder zu einer elektrischen Anlage fließenden Netzstroms nach dem Oberbegriff des Patentanspruches 1 sowie ein Verfahren zur Blind- und/oder Oberschwingungskompensation nach dem Oberbegriff des Patentanspruchs 7.

Die Qualität der Spannung öffentlicher Versorgungsnetze wird in einem zunehmend höheren Ausmaß durch Netzrückwirkungen von Stromoberschwingungen und/oder Blindstrom erzeugenden elektrischen Anlagen und Geräten beeinträchtigt; dabei werden Abweichungen der Netzspannung von der reinen Sinusform durch Oberschwingungen charakerisiert, die auf Rückwirkungen von Anlagen und Komponenten der Leistungselektronik mit nicht-sinusförmigen Strömen zurückzuführen sind, etwa Stromrichterantriebe, Geräte der Unterhaltungselektronik, Netzgeräte oder Dimmer, sowie elektrische Betriebsmittel, die von sich aus eine nicht-lineare Strom-, Spannungs-Charakteristik aufweisen, wie Gasentladungslampen, Drosselspulen oder Kleintransformatoren.

Derartige Oberschwingungsströme erzeugen an den Impedanzen der Versorgungsnetze Oberschwingungsspannungen, die sich der Netzspannung überlagern und eine zusätzliche, elektrische Beanspruchung des Netzes bzw. der angeschlossenen Verbraucher bewirken.

Aus diesem Grunde muß der Betreiber eines Versorgungsnetzes darauf achten, daß Oberschwingungspegel in seinem Netz bestimmte Grenzwerte nicht überschreiten.

Demgegenüber nimmt durch ständig weitergehende Entwicklungen auf dem Gebiet der Leistungselektronik und der Mikroelektronik die Anzahl von derartigen, unerwünschte Stromoberschwingungen erzeugenden dynamischen Stromrichterantrieben ständig zu. Dabei können selbst Geräte geringer Leistung in ihrer Summe die Qualität der Netzversorgung nachhaltig negativ beeinflussen.

Aus dem Stand der Technik sind technische Vorgehensweisen bekannt, die bei den beispielhaft genannten Vorrichtungen eine angenähert sinusförmige Stromaufnahme erzwingen; gleichwohl wird dies üblicherweise mit einem Aufwand an leistungselektronischen Komponenten betrieben, der die Einsetzbarkeit dieser bekannten Technologie insbesondere für kleinere Anlagen unwirtschaftlich macht.

In analoger Weise gelten die obigen Betrachtungen auch für die unerwünschte Erzeugung von Blindstromkomponenten durch angeschlossene Verbraucher bzw. elektrische Betriebsmittel. Diese belasten das öffentliche Verteilungsnetz zusätzlich ohne elektrische Arbeit zu leisten. Gerade Blindlaststöße können zu erheblichen Spannungsschwankungen führen und dadurch weitere, angeschlossene Betriebsmittel stören.

Durch die zukünftig geltenden, weiter verschärften gesetzlichen Vorschriften zur Stromqualität im Netz wird der Bedarf für Vorrichtungen zum Ausgleichen von unerwünschten Stromoberschwingungs- und/oder Blindstromkomponenten an einem Stromversorgungsnetz zusätzlich unterstützt, wobei insbesondere ein Bedarf hinsichtlich konstruktiv wenig aufwendiger, flexibler und trotzdem wirksamer Systeme besteht.

Aufgabe der vorliegenden Erfindung ist es daher, eine gattungsgemäße Vorrichtung bzw. ein gattungsgemäßes Verfahren zur Beeinflussung von Stromoberschwingungen bzw. Blindstromkomponenten zu schaffen, welche(s) mit geringem Aufwand zu realisieren ist, auf einem einfachen Entwurfsprinzip beruht und somit auch schon bei kleinen bis mittleren Anlagen wirtschaftlich betreibbar ist.

Die Aufgabe wird durch die Vorrichtung mit den Merkmalen des Patentanspruches 1 sowie das Verfahren mit den Merkmalen des Patentanspruches 7 gelöst.

Vorteilhaft besteht das erfindungsgemäße Prinzip aus einer Kompensationseinrichtung, die parallel zu der Oberschwingungen und/oder Blindstrom erzeugenden Anlage angeschlossen ist, und die einen Strom aufnimmt, der der invertierten bzw. negierten Summe der von der Anlage aufgenommenen Stromoberschwingungen und/oder Blindströme entspricht. Damit fließt im Ergebnis aus dem Netz nur der um die nachteiligen Einflüsse bereinigte Grundschwingungs-Wirkstrom.

Vorteilhaft arbeitet zudem die erfindungsgemäße Vorrichtung mit einer sehr einfachen Steuer- und Regeleinrichtung mit darüber hinaus nur geringen Gesamtverlusten, so daß eine effizient arbeitende Anlagenlösung mit nur niedrigem Hardware-Aufwand realisiert werden kann. Die Erfindung eignet sich damit nicht nur besonders bevorzugt für den gesamten Antriebsbereich, sondern auch etwa für unterbrechungsfreie Stromversorgungen oder Photovoltaikanlagen größerer Leistung. Hervorzuheben ist insbesondere auch die hohe Dynamik der erfindungsgemäßen Lösung.

Erfindungsgemäß wird in diesem Zusammenhang unter "Netzstrom" derjenige Strom mit Wirk-, Blind- und Oberschwingungskomponenten verstanden, wie er von dem elektrischen Verbraucher (der alternativ auch eine generatorisch wirkende Einrichtung sein kann) aufgenommen bzw. abgegeben wird.

Im Ergebnis werden die aufgrund der endlichen Kurzschlußleistung des Netzes erzeugten Spannungsoberschwingungen sowie det unerwünschte Blindstrom am Netzanschlußpunkt wirksam kompensiert, so daß das Netz nur mit dem reinen Wirkstrom belastet wird und an der Anschlußstelle stets der Leistungsfaktor $\lambda = 1$ erzwungen wird. Dabei sind -- im Gegensatz zu bekannten Einrichtungen ähnlicher Funktion, die mit umfangreichen Rechner- und Mikrocomputer-unterstützten Steuer- und Regeleinrichtungen arbeiten -- nur sehr einfache Schaltungskomponenten notwendig, da erfindungsgemäß die zur Kompensation benötigten Ströme einer Drosselspule eingeprägt werden. Da gleichzeitig dem Netz zur Deckung der Verluste ein in derselben Drosselspule eingeprägter, in Phase zur Netzspannung liegender, sinusförmiger Strom entnommen wird, kann dieser Strom einen kapazitiven Speicher auf die erforderliche (hohe) Gegenspannung aufladen und diese während des erfindungsgemäßen Kompensationsbetriebes konstant halten.

Das der Erfindung zugrundeliegende Schaltungsprinzip ist unabhängig von der Kompensationsleistung. Die äußerst einfache Schaltungsanordnung ermöglicht zudem unter Verwendung handelsüblicher Bauelemente bei sehr geringen Verlusten und in weiten Leistungsbereichen eine überaus wirtschaftliche Kompensation.

Vorteilhafte Weiterbildungen der Erfindung sind in den Unteransprüchen beschrieben.

So kann etwa durch Wirkung der weiterbildungsgemäß vorteilhaften Schalteinrichtung zwischen Blindstrom- und Oberschwingungskompensation (Schalter offen) und reiner Oberschwingungskompensation ohne Blindstromausgleich (Schalter geschlossen) gewechselt werden.

Vorteilhaft und weiterbildungsgemäß ist zudem vorgesehen, das Ausfiltern der Grundschwingungskomponente in der ersten Einrichtung zum Erfassen des auszugleichenden Netzstroms mit einer eine Bandsperrecharakteristik aufweisenden Filtereinheit zu realisieren, die einen Bandpaß, einen nachgeschalteten Negierer (Invertierer) sowie eine Umgehungsschleife besitzt. Vorteilhaft wird auf diese Weise ein unverzögerter, aktueller Laststrom an die erfindungsgemäße Vergleichseinrichtung angelegt, so daß die erfindungsgemäße Vorrichtung herausragende Dynamikeigenschaften besitzt.

Weitere Vorteile, Merkmale und Einzelheiten der Erfindung ergeben sich aus der nachfolgenden Beschreibung von Ausführungsbeispielen sowie anhand der Zeichnungen; diese zeigen in:

Fig. 1: ein Blockschaltbild in einphasiger Darstellung der erfindungsgemäßen Vorrichtung zum Ausgleichen bzw. Kompensieren von Blind- und Oberschwingungskomponenten gemäß einer ersten, bevorzugten Ausführungsform der Erfindung und

Fig. 2: ein Blockschaltbild einer einphasigen Vorrichtung zum wahlweisen Ausgleichen von Blind- und Oberschwingungskomponenten (erste Schalterstellung) bzw. lediglich von Oberschwingungskomponenten (zweite Schalterstellung), gemäß einer zweiten Ausführungsform der Erfindung.

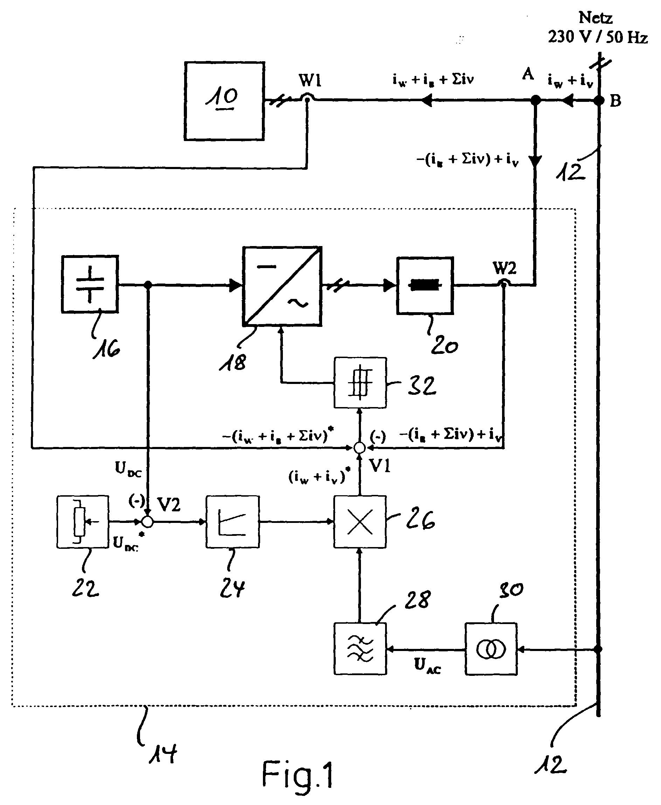

In Fig. 1 ist als Blockschaltbild eine erste, bevorzugte Ausführungsform des Strom-Oberschwingungskompensators (best mode) gezeigt, mit einem Verbraucher 10, der einem Versorgungsnetz 12 neben einem Wirkstrom $i_W$ auch Oberschwingungsströme $\Sigma i_v$ sowie einem Blindstrom $i_B$ entnimmt. Der erfindungsgemäße Kompensator bewirkt, daß an einer Anschlußstelle A am Netz 12 sowohl die Summe der Stromoberschwingungen $\Sigma iv$ als auch der Blindanteil $i_B$ des Verbraucherstroms kompensiert werden und entsprechend dem Netz lediglich der Wirkstrom $i_W$ zuzüglich eines damit in Phase liegenden, sinusförmigen Verluststromes $i_V$ entnommen wird.

Die in der Fig. 1 gezeigte Schaltungsanordnung besteht hinsichtlich der durch die gestrichelte Linie 14 umrissenen Kompensationsvorrichtung aus einem Leistungskreis, realisiert durch einen kapazitiven Speicher (Kondensator) 16, einem in Brückenschaltung geschalteten, mit hoher Frequenz taktenden, selbstgeführten Stromrichter 18 sowie einer Stromeinprägedrossel 20, die mit der Netz-Anschlußstelle A verbunden ist.

Innerhalb der Kompensationsvorrichtung 14 arbeiten weitere Netzwerke mit diesem Leistungskreis zusammen: So ist ein aus einem Spannungs-Sollwertgeber 22, einem Spannungsregler 24, einem Multiplizierer 26, einem selektiven Filter 28, einer Wandlereinheit 30 sowie einem Zweipunktregler 32 gebildeter Steuer- und Regelkreis vorgesehen, der in der im weiteren im Detail zu beschreibenden Art und Weise den Leistungskreis beeinflußt und so das erwünschte Oberschwingungs- und Blindstrom-Kompensationsverhalten ermöglicht.

Eine Kompensation der Oberschwingungsströme und des Blindstroms an einem beispielhaft beschriebenen, einphasigen 230 Volt, 50 Hz-Netz ist ohne Zwischenschaltung eines Transformators nur möglich, wenn die Spannung am kapazitiven Speicher 16 unter Berücksichtigung eines Spannungsabfalls im Leistungskreis mindestens etwa 350 bis 400 Volt beträgt.

Der Ladevorgang des kapazitiven Speichers 16 und die Wirkungsweise der Netzwerke 22 bis 32 ist wie folgt: An einem Vergleichsknoten V2 wird ein aktueller Ist-Wert der Spannung am Kondensator 16 von einer vorbestimmten, bevorzugt einstellbaren Gleichspannung am Spannungs-Sollwertgeber 22 subtrahiert und die entstehende Differenzspannung dem als PI-Regler realisierten Spannungsregler 24 zugeführt. Das Ausgangssignal des Reglers 24 liegt an einem Eingang des Multiplizierers 26 an.

Auf einen zweiten Eingang des Multiplizierers 26 wird eine in Phase zur Netzspannung im Netz 12 liegende, sinusförmige Wechselspannung geschaltet, welche oberschwingungsfrei aus der Netzspannung mittels der Wandlereinheit 30 und dem nachgeschalteten, selektiven Filter 28 mit Bandpaßcharakteristik, abgestimmt auf die Netz-Grundschwingung, erzeugt wird.

Durch Wirkung des Multiplizierers 26 entsteht somit an dessen Ausgang ein vom Spannungsregler 24 gesteuerter, zur Netzspannung in Phase liegender Stromsollwert $(i_W + i_V)^*$, welcher an einem weiteren Vergleichsknoten V1 zum Schließen einer Schleife mit einem von einem Stromwandler W2 am Ausgang der Drosselspule 20 gewonnenen, aktuellen Strom-Ist-wert verglichen wird, und zwar in negierter Weise $-(i_B+\Sigma i_v+i_V)$ .

Darüber hinaus wird der Vergleichsstelle V1 der invertierte (negierte), aktuelle Laststrom als Sollwert $-(i_W+i_B+\Sigma i_v)^*$ zugeführt, erfaßt von einem weiteren Stromwandler W1 am Eingang des elektrischen Verbrauchers 10. Dieses Signal wird in der beschriebenen Weise als negiertes, proportionales Signal der Vergleichsstelle V1 zugeführt.

Ohne angeschlossene Spannungsregelung würde sich der kapazitive Speicher 16 infolge des über diesen Zweig an der Vergleichsstelle V1 anliegenden, invertierten Wirkstromsollwertes $-i_W^*$ entladen; über die erfindungsgemäße Spannungsregelung wird jedoch die Spannung am kapazitiven Speicher 16 dadurch konstant gehalten, daß der Ausgang des Multiplizierers 26 genau die Amplitude $+i_W^*$ zuzüglich eines Verluststromes $I_V^*$ vorgibt.

Der hieraus resultierende Sollwert $I_{RES}^*$ an der Vergleichsstelle V1 ist demnach:

$$i_{RES}^* = (i_W+i_v) - (i_W+i_B+\Sigma iv)^*$$

$$i_{RES}^* = -(i_B+\Sigma iv)^*+i_V^*$$

Dieser Sollwert $i_{RES}^*$ wird dann mit dem oben beschriebenen, vom Wandler W2 erfaßten Stromistwert $-(i_B+\Sigma i_v)+i_V$ verglichen und die entstehende Differenz dem Zweipunktregler 32 zugeführt, der mit seinem Ausgang die Ventile des Stromrichters 18 so schaltet, daß der entstehende Stromistwert nur kleine, von der Hysterese des Zweipunktreglers 32 abhängige positive und negative Abweichungen von der vorgegebenen Sinusform hat, also weitgehend dem resultierenden Sollwert $i_{RES}^*$ folgt.

Genauer gesagt steigt bei positiver Ausgangsspannung des Stromrichters der Strom, bis er an eine obere Grenze des Hysteresebandes des Zweipunktreglers stößt. Dann wird durch Umschaltung der Ventile die negative Kondensatorspannung auf die Drosselspule 20 geschaltet, und die Stromänderung wird negativ, bis die untere Grenze des Hysteresebandes des Reglers 32 erreicht ist; dieser Regelungsvorgang erfolgt bei einer Schaltfrequenz der Stromrichterventile im Bereich von üblicherweise von etwa 20 kHz bis etwa 30 kHz, die neben der Höhe der Kondensatorspannung auch von der Hysterese des Zweipunktreglers 32 sowie von der Induktivität der Einprägedrossel 20 abhängt.

Entsprechend wird dann an der Anschlußstelle A des Strom-Oberschwingungskompensators 14 dieser eingeprägte Strom eingespeist. Die Stromoberschwingungen $\Sigma i_v$ und der Blindstrom $i_B$ des Verbrauchers 10 werden neutralisiert, und vom Netz wird nur der Wirkstrom $i_W$, vermehrt um den sinusförmigen, gleichphasigen Verluststrom $i_V$, entnommen.

Durch die in Fig. 1 gezeigte Schaltung ist somit eine wirksame Kompensation sowohl von (üblicherweise vorhandenem) Blindstrom als auch der Oberschwingungskomponenten erfolgt.

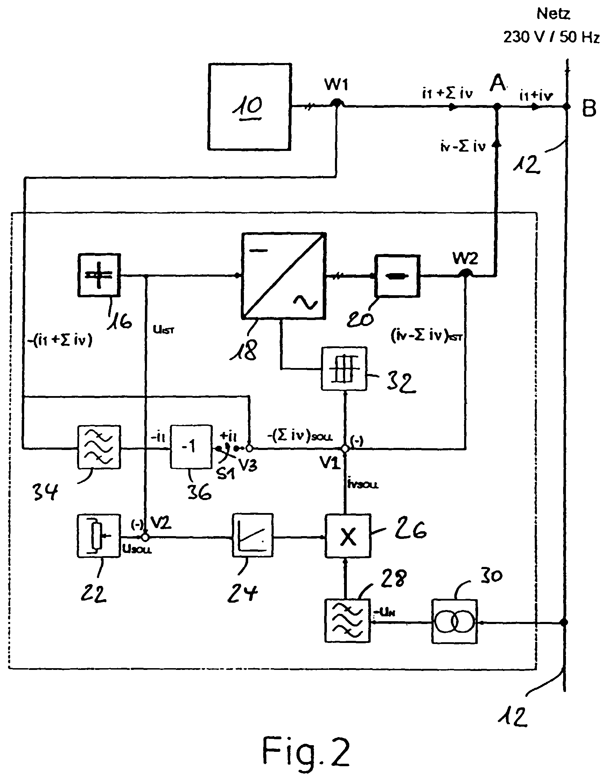

Unter Bezug auf die Fig. 2 wird nunmehr eine zweite Ausführungsform der Erfindung beschrieben, die eine selektive Kompensation dahingehend ermöglicht, daß -- je nach Schalterstellung des Schalters S1 -- entweder eine Oberschwingungs- und Blindstromkompensation, entsprechend der ersten Ausführungsform gemäß Fig. 1, erfolgen kann, oder aber lediglich eine reine Oberschwingungskompensation.

Soweit gegenüber Fig. 1 identische Funktionskomponenten vorliegen, wurden dieselben Bezugszeichen wie in der Fig. 1 benutzt.

Der in der Fig. 2 geöffnet gezeigte Schalter S1 unterbricht einen ein weiteres, selektives Filter 34 sowie eine Negierungseinheit 36 aufweisenden Zweig, so daß die in Fig. 2 gezeigte Schaltung bei geöffneter Schalterstellung S1 in Aufbau und Funktionsweise vollständig der im Zusammenhang mit Fig. 1 beschriebenen Vorrichtung entspricht; entsprechend erfolgt bei dieser Schalterstellung in der oben beschriebenen Weise sowohl eine Kompensation des Blindstroms als auch der Oberschwingungskomponenten gegenüber dem Netz 12. Im Zusammenhang mit der Fig. 2 ist lediglich die unterschiedliche Richtung der Zählpfeile zu berücksichtigen, welche ggf. Phasenkorrekturen notwendig macht. Auch ist in Fig. 2 ein jeweiliges Signal explizit als IST- oder SOLL-Wert bezeichnet.

Steht jedoch der Schalter S1 in der geschlossenen Stellung, so verhält sich die Schaltungsanordnung der Fig. 2 als reiner Oberschwingungskompensator, wie im weiteren erläutert werden soll.

Insbesondere liegt dann nämlich am Knoten V3 ein Summensignal, bestehend aus einem an W1 abgegriffenem Strom-Istwert $-(i_1+\Sigma i_v)$, wobei im Zusammenhang mit Fig. 2 vereinfachend $i_1$ als $i_W+i_B$ (also als Summe von Wirk- und Blindstrom) angesehen werden soll, und einem gefilterten und invertierten Signal $+i_1$.

Das wiederum auf die Grundfrequenz des Verbraucherstroms abgestimmte, selektive Filter 34 mit Bandpaßcharakteristik und nachgeschalteter Invertierungseinheit 36 wirkt dabei zusammen mit dem direkt von W1 durchgeschleiften, überbrückenden Zweig am Knoten V3 wie eine Bandsperre, so daß das resultierende Signal an V3 $-(\Sigma i_v)SOLL$ beträgt, also ein reiner Oberschwingungs-Sollwert entsteht.

Entsprechend erfolgt dann analog zu der oben im Zusammenhang mit Fig. 1 dargestellten Regelung des Zweipunktreglers 32 eine Kompensation der Oberschwingungen im Ausgangsstrom, vorgegeben durch das Sollsignal.

Bei dieser Ausführungsform ist jedoch zu berücksichtigen, daß das den Zweig mit Bandsperrecharakteristik bildende selektive Filter 34 mit einem sehr steilflankigen Frequenzgang insoweit empfindlich ist, als schon eine geringe Verstimmung desselben -- also etwa Änderung der Resonanzfrequenz infolge Bauteiletoleranzen oder auch Temperaturabhängigkeit der Bauteile -- zu einer prozentual großen Fehlabbildung des Grundschwingungsstroms führen kann, so daß an V3 das resultierende Signal nicht vollständig von der Grundschwingung $i_1$ befreit ist. Dies würde dann dazu führen, daß der Wirkanteil $i_W$ von dieser verbleibenden $i_1$-Komponente zwar durch das Netzwerk 22, 24, 26, 32 gegengeführt wird, nicht jedoch der an V3 im nicht-idealen Fall verbleibende Blindanteil $i_B$. Im Ergebnis würde dann also auch die Schaltung gemäß Fig. 2 bei geschlossenem Schalter S1 eine gewisse Blindstromkompensation durchführen.

In der praktischen Realisierung könnte es sich daher insbesondere anbieten, das selektive Bandpaßfilter 34, wie auch das selektive Bandpaßfilter 28, dessen genaue Abstimmung auf die Netzfrequenz in entsprechender Weise kritisch ist, als frequenzgeführtes, einer jeweiligen Grundschwingung nachgeführtes Filter auszubilden, wie es etwa durch netzabhängig frequenzgesteuerte Filtereinheiten realisiert werden könnte.

Grundsätzlich und theoretisch betrachtet würde man also die erste Ausführungsform der Erfindung gemäß Fig. 1 als extremen Sonderfall einer Schaltung gemäß Fig. 2 bei geschlossenem Schalter S1 verstehen können, bei welcher Filter 34 grob verstimmt und somit nicht geeignet ist, wesentliche Grundschwingungsanteile $i_B$ und $i_W$ des Ist-Stromes $i_1$ auszufiltern.

Bedingt durch den Umschalter S1 ist es jedoch vorteilhaft ermöglicht, bei idealem oder annähernd idealem Filter 34 beide Betriebszustände in der erfindungsgemäß vorteilhaften Weise zu realisieren.

Während aus Gründen der Vereinfachung die dargestellten Ausführungsbeispiele einphasig realisiert sind, liegt es im Rahmen der Erfindung, geeignete andere Ausbildungen zu wählen, etwa auch die dreiphasige.

**Patentansprüche**

1. Vorrichtung zum Ausgleichen von Blind- und/oder Oberschwingungskomponenten eines von oder zu einer elektrischen Anlage (10) fließenden Netzstroms durch Einprägen eines entsprechend negierten Stroms mittels einer Stromquelle, wobei die Vorrichtung einen kapazitiven Speicher (16) und einen mit dem kapazitiven Speicher (16) zusammenwirkenden Stromrichter (18) aufweist, dadurch gekennzeichnet, daß die Stromquelle eine erste Einrichtung zum Erfassen des auszugleichenden Netzstroms (W1),

    eine zweite Einrichtung (22,24,26) zum Erzeugen eines Stromsollwerts zur Aufrechterhaltung einer konstanten Spannung am kapazitiven Speicher (16) und
eine mit der ersten und der zweiten Einrichtung verbundene Vergleichseinrichtung (V1) zum Erzeugen eines um einen Wirkanteil bereinigten, resultierenden Sollwerts für das Einprägen des negierten Stroms als Reaktion auf die durch die erste und die zweite Einrichtung erfaßten Signale aufweist.

2. Vorrichtung nach Anspruch 1, dadurch gekennzeichnet, daß die erste Einrichtung zum Erfassen des Netzstroms lediglich eine Negierung des Netzstroms vornimmt und zum Zuführen eines entsprechend negierten Werts zu der Vergleichseinrichtung (V1,V2) ausgebildet ist.

3. Vorrichtung nach Anspruch 1 oder 2, dadurch gekennzeichnet, daß die erste Einrichtung einen mittels einer Schalteinrichtung (S1) zuschaltbaren Zweig aufweist, der zum mittels der Schalteinrichtung bestimmbaren Ausfiltern einer Grundschwingungskomponente aus dem Netzstrom eingerichtet ist.

4. Vorrichtung nach Anspruch 3, dadurch gekennzeichnet, daß zum Ausfiltern der Grundschwingungskomponente die erste Einrichtung eine Bandsperre aufweist, die mittels einer Bandpaßvorrichtung sowie einer nachgeschalteten Negierungseinheit im zuschaltbaren Zweig realisiert ist.

5. Vorrichtung nach einem der Ansprüche 1 bis 4, dadurch gekennzeichnet, daß die zweite Einrichtung zum Erzeugen des Stromsollwerts eine Vorrichtung zum Vorgeben eines Gleichspannungs-Sollwerts (22,24), eine Vorrichtung zum Erzeugen eines netzsynchronen, sinusförmigen Spannungssignals (28,30) sowie eine Multipliziereinheit zum Erzeugen des Stromsollwerts aus diesen Spannungen aufweist.

6. Vorrichtung nach einem der Ansprüche 1 bis 5, dadurch gekennzeichnet, daß mindestens eine zur Realisierung der Vorrichtung eingesetzte Filtereinheit, insbesondere eine Bandpaß-Filtereinheit, als frequenzgeführtes, einer aktuellen Netzfrequenz bzw. -phase nachgeführtes Filter ausgebildet ist.

7. Verfahren zum Ausgleichen von Blind- und/oder Oberschwingungskomponenten, insbesondere zum Betreiben einer Vorrichtung nach einem der Ansprüche 1 bis 6, gekennzeichnet durch die Schritte:

- Erfassen eines auszugleichenden Blind- und/oder Oberschwingungskomponenten enthaltenen, von oder zu einer elektrischen Anlage fließenden Netzstroms,
- Erzeugen eines Stromsollwerts zur Aufrechterhaltung einer Gleichspannung an einem Speicher als Basis für ein Einprägen eines kompensierenden, negierten Stromes in das Netz;

- Erzeugen eines resultierenden, um den Wirkanteil bereinigten Sollwerts für das Einprägen des negierten Stroms auf der Basis eines Vergleichswerts des auszugleichenden Netzstromes mit dem Stromsollwert.

Fig.1

Fig.2